# EUROPEAN PATENT APPLICATION

(11) **EP 4 411 326 A1**
(43) Date of publication of application: **07.08.2024**
(21) Application number: 23154512.0
(22) Date of filing: 01.02.2023
(51) Int. Cl.: G01F 1/66, F15D 1/02, G01F 1/667

(54) **FLOW STRAIGHTENER AND SENSOR ASSEMBLY**

(71) Applicant: Siemens Aktiengesellschaft, 80333 München (DE)
(72) Inventor: Glöckle, Steffen, 76356 Weingarten (Baden) (DE)
(74) Representative: Siemens Patent Attorneys

(57) **Abstract**

Flow straightener and sensor assembly. A flow straightener assembly (1) for straightening a flow in a flow meter, the flow straightener comprising a plurality of flow straightening members (4 - 15), the plurality of flow straightening members (4 - 15) comprising at least one first flow straightening member selected from: a vane (5, 6) of the at least one first flow straightening member (5, 6; 12, 15), a tubular member (12, 15) of the at least one first flow straightening member (5, 6; 12, 15); the flow straightener assembly (1) comprising a socket (16), the socket (16) comprising a seat (17) and a mounting member for mounting the flow sensor (3) to the seat (17); wherein the socket (16) is embedded in the plurality of flow straightening members (4 - 15). The socket (16) can be integrated into the plurality of flow straightening members (4 - 15).

## Description

### Background

The present disclosure relates to a flow straightener for piping circuits. More specifically, the present disclosure relates to a flow straightener for piping circuits of an installation for heating and/or ventilation and/or air-conditioning. The instant disclosure deals with an assembly providing the flow straightener and a mount for a sensor. The sensor can be a flow sensor such as an ultrasonic flow sensor.

Flow of a liquid such as water through a piping circuit can be monitored using various types of meters. These meters include, but are not limited to:
- vortex shedding meters,
- turbine flow meters,
- ultrasonic meters,
- electromagnetic flow sensors based on Faraday's law of induction, and
- orifice meters.

These meters each have advantages and shortcomings. For example, vortex flow meters require a minimum amount of turbulence. That minimum amount of turbulence is usually expressed in Reynolds numbers *Re* such as
*Re* > 8'000 or
*Re* > 10'000.

Most flow meters require that the pipe section of the piping circuit with the flow meter is full or always full. In addition, a minimum distance between a flow meter and tees, elbows, pumps, and so on is required to ensure proper operation. Guidance on such minimum distances is found in a handbook by B.G. Lipták, INSTRUMENT ENGINEER'S HANDBOOK, Fourth Edition, Volume I: Process Measurement and Analysis, CRC Press, 2003. According to page 356 of this handbook, ultrasonic flow meters typically require a quieting section of ten to twenty diameters upstream. The same flow meters require a quieting section of typically five diameters downstream.

The engineering handbook also discloses on page 353 that flow straighteners can be required where flow profiles are disturbed. That said, flow straighteners are also employed in other flow meters such as vortex shedding meters. According to page 390 of the handbook by B.G. Lipták, radial vanes or bundles of tubes can be inserted in vortex meters as flow straighteners.

A European patent application EP1775560A2 was filed by KAMSTRUP AS on 27 June 2006. The application was published on 18 April 2007. A priority date of 14 October 2005 is claimed. EP1775560A2 deals with an ultrasonic flow meter having a flow mixer.

EP1775560A2 discloses an assembly having a housing and an axial tube having an inlet. A flow straightener is disposed near the inlet of the axial tube. The assembly comprises two ultrasound transducers for generating and detecting ultrasonic signals. The two ultrasound transducers are each separate from the flow straightener.

Various appliances for heating and/or ventilation and/or air-conditioning employ flow meters such as ultrasonic flow meters. For example, heat meters can comprise such flow sensors.

A European patent application EP1975582A2 was filed by HYDROMETER GMBH on 24 November 2007. The application was published on 1 October 2008. A priority date of 29 March 2007 is claimed. EP1975582A2 deals with a heating or cooling counter device for determining the energy consumption in a temperature controlling loop.

A heat meter is disclosed in EP1975582A2. The heat meter provides two ultrasonic probes for measurements of flow through the heat meter. The heat meter also comprises two temperature sensors for measurements of supply and return temperatures. The temperature sensors and the ultrasonic probes are arranged inside a pipe circuit. A consumer device is arranged upstream of the temperature sensors and upstream of the ultrasonic probes.

Flow sensors such as ultrasonic sensors can also be part of control valves. For example, the Chinese utility model CN000201093671Y deals with a control valve for compensating pressure variations. The Chinese utility model CN000201093671Y was filed on 27 September 2007. It was granted on 30 July 2008.

An arrangement having two ultrasonic sensors is disclosed in CN000201093671Y. The two ultrasonic flow meters are each located upstream of a control valve. The two flow meters communicate with the same controller and the controller communicates with the valves via actuators. To that end, each of the valves connects to an actuator.

A flow straightener can be employed in each of the appliances for heating and/or ventilation and/or air-conditioning as mentioned above. These appliances also require flow sensors. The instant disclosure introduces an assembly wherein the flow straightener provides a mount for a sensor such as an ultrasonic sensor. Appliances can thus be assembled wherein flow sensors are no longer separate from flow straighteners, thereby achieving compact assemblies.

### Summary

The present disclosure deals with a system comprising a flow straightener and a mount for a flow sensor. The flow sensor can, by way of example, comprise an electromagnetic sensor or an ultrasonic flow sensor. The flow sensor can, by way of another example, be an electromagnetic sensor or an ultrasonic flow sensor. The system affords appliances for heating and/or ventilation and/or air-conditioning with few individual parts. These appliances include, but are not limited to, flow control valves and heat meters. Due to fewer individual parts and a due to a modular approach, there will be fewer parts that are prone to failure. The system becomes robust and compact. For example, no separate mounts are necessary for flow sensors and for flow straighteners. Instead, a single mount will suffice to fasten both the flow straightener and the ultrasonic sensor to a housing of an appliance.

The flow straightener and the mount for the sensor preferably form a single mechanical part. That is, the flow straightener and the mount for the sensor form a single piece thereby further reducing complexity. The flow straightener and the mount for the sensor cannot be separated from one another without impairing the mechanical integrity of the entire system. It is even envisaged that the flow straightener and the mount for the sensor are made of the same materials or of the same material. For example, the flow straightener and the mount for the sensor can both be made of a metal such as aluminum and/or brass and/or steel. The metal can be a cast metal. The flow straightener and the mount for the sensor can also be made of a polymeric material such as an epoxide material and/or a polyvinyl chloride material. The flow straightener and the mount for the sensor can, by way of another example, be made of a polymeric material such as polypropylene material.

The system can also comprise a housing. The flow straightener and the mount for the flow sensor can be fastened to the same housing. The housing can, by way of example, be a tubular housing. The housing can also be an axial housing such as an axial tubular housing. In a special embodiment, the housing is cylindrical. The flow straightener and the mount for the flow sensor are both arranged inside the housing. The housing and/or the pipe part can be made of a metal such as aluminum and/or brass and/or steel. The metal can be a cast metal.

This approach is even more modular since the housing can be attached to the piping circuit of a heating and/or ventilation and/or air-conditioning system. More specifically, the housing such as the tubular housing can be a pipe part having an outlet port. In an embodiment, the housing has a threaded portion at or near the outlet port. Due to the threaded portion, a system can engage with a piping circuit wherein the circuit also has an end with a threaded portion. The threaded portion at or near the outlet of the pipe part enclosing the flow straightener preferably matches a threaded portion of the piping circuit. The threaded portion of the pipe part preferably matches a threaded portion of a piping circuit of the system for heating and/or ventilation and/or air-conditioning.

Likewise, the housing such as the tubular housing can be a pipe part having an inlet port. In an embodiment, the housing has a threaded portion at or near the inlet port. Due to the threaded portion, a system can engage with a piping circuit wherein the circuit also has an end with a threaded portion. The threaded portion at or near the inlet of the pipe part enclosing the flow straightener preferably matches a threaded portion of the piping circuit. The threaded portion of the pipe part preferably matches a threaded portion of a piping circuit of the system for heating and/or ventilation and/or air-conditioning. More specifically, the threaded portion of the pipe part preferably can match a threaded portion of a piping circuit and/or a pipe part of a control valve. The threaded portion of the pipe part can also match a threaded portion of at least one of
- a piping circuit,
- a pipe part of a heat meter,
- a flow meter,
- an ultrasonic flow meter.

Systems with pluggable housings and/or pluggable pipe parts are still envisaged. For example, the housing and/or the pipe part of the system can comprise an outlet port. A pluggable end is disposed at or near the outlet port.

The pluggable end at or near the outlet port can then mechanically connect to a compatible socket of at least one of
- a piping circuit,
- a flow meter,
- an ultrasonic flow meter.

For example, the pluggable end can connect to a compatible and/or matching socket of a circuit of a system for heating and/or ventilation and/or air-conditioning. By way of another example, the pluggable end can connect to a compatible socket of a pipe circuit and/or of a pipe part of a control valve. By way of yet another example, the pluggable end can connect to a compatible socket of a pipe circuit and/or of a pipe part of a heat meter. By way of still another example, the pluggable end can connect to a compatible socket of a pipe circuit and/or of a pipe part of a flow meter.

Likewise, the housing and/or the pipe part of the system can comprise an inlet port. A pluggable end is disposed at or near the inlet port. The pluggable end at or near the inlet port can then mechanically connect to a compatible socket of a piping circuit. For example, the pluggable end can connect to a compatible and/or matching socket of a circuit of a system for heating and/or ventilation and/or air-conditioning. By way of another example, the pluggable end can connect to a compatible socket of a pipe circuit and/or of a pipe part of a control valve. By way of yet another example, the pluggable end can connect to a compatible socket of a pipe circuit and/or of a pipe part of a heat meter. By way of still another example, the pluggable end can connect to a compatible socket of a pipe circuit and/or of a pipe part of a flow meter.

The flow straightener and the mount for the sensor and the housing such as the pipe part preferably form a single mechanical part. That is, the flow straightener and the mount for the sensor and the housing form a single piece thereby further reducing complexity. The flow straightener and the mount for the sensor and the housing cannot be separated from one another without impairing the mechanical integrity of the system. More specifically, the flow straightener and the mount for the sensor and the pipe part cannot be separated from one another without impairing the mechanical integrity of the system. It is envisaged that the flow straightener and the mount for the sensor and the housing are made of the same materials or of the same material. For example, the flow straightener and the mount for the sensor and the housing can be made of a metal such as aluminum and/or brass and/or steel. The metal can be a cast metal. The flow straightener and the mount for the sensor and the housing can also be made of a polymeric material such as a polyvinyl chloride material. The flow straightener and the mount and the housing can, by way of another example, be made of a polymeric material such as polypropylene material.

The system can comprise the flow straightener, the mount for the flow sensor and the flow sensor. The flow sensor can, by way of example, comprise an electromagnetic sensor based on Faraday's law of induction and/or an ultrasonic flow sensor. The flow sensor can, by way of another example, be an electromagnetic sensor based on Faraday's law of induction or an ultrasonic flow sensor. Integration of the flow sensor into the system enables an even more modular approach to systems for heating and/or ventilation and/or air-conditioning. More specifically, integration of the flow sensor into the system enables an even more modular approach to
- control valves,
- to heat meters,
- to flow meters.

In a highly integrated embodiment, the system also comprises the electric wires for connecting to the sensor. For example, the system can comprise the electric wires connecting to an electromagnetic sensor based on Faraday's law of induction and/or to an ultrasonic flow sensor. The electric wires can be mechanically fastened to a member of the flow straightener such as a frame of the flow straightener. The electric wires can also be mechanically fastened to a wall of the housing. The electric wires can still run inside a groove within the housing.

It is still envisaged to integrated optical fibres into the system. For example, the system can comprise the optical fibres connecting to an electromagnetic sensor based on Faraday's law of induction and/or to an ultrasonic flow sensor. The optical fibres can be mechanically fastened to a member of the flow straightener such as a frame of the flow straightener. The optical fibres can also be mechanically fastened to a wall of the housing. The optical fibres can still run inside a groove within the housing. Optical fibres confer advantages in explosive and/or hasardous environments.

### Brief description of the drawings

Various features will become apparent to those skilled in the art from the following detailed description of the disclosed non-limiting embodiments. The drawings that accompany the detailed description can be briefly described as follows:
FIG 1 is a schematic representation of a flow straightener assembly having a housing and a flow sensor.
FIG 2 is a schematic representation of a flow straightener assembly wherein a flow sensor is mounted between two flow straightening members.
FIG 3 is another schematic representation of a flow straightener assembly wherein a flow sensor is mounted between two flow straightening members.
FIG 4 illustrates a socket for receiving a flow sensor.

### Detailed description

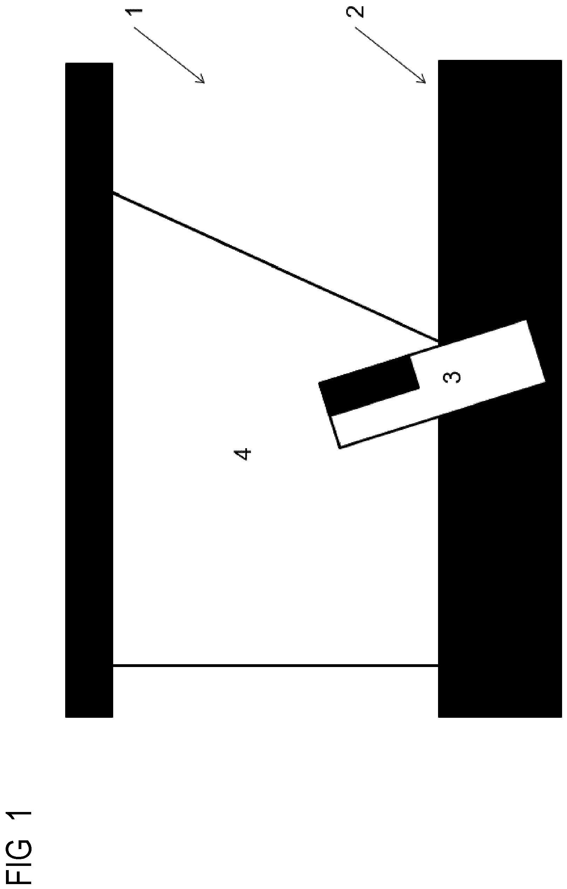

FIG 1 illustrates a flow straightener assembly (1) having a housing (2) and a flow sensor (3). The flow straightener assembly (1) also has one or more flow straightening members (4) for straightening flow. A mirror or the flow sensor (3) is directly or indirectly mounted to at least one of
- the housing (2),
- the one or more flow straightening members (4).

In a special embodiment, the flow sensor (3) is directly or indirectly mounted to the housing (2) and to the flow straightening member (4).

In a rigid embodiment, the flow sensor (3) is rigidly mounted to at least one of
- the housing (2),
- the one or more flow straightening members (4).

In a special embodiment, the flow sensor (3) is rigidly mounted to the housing (2) and to the flow straightening member (4).

If the flow sensor (3) is rigidly mounted to one or more other members (2, 4), it can no longer move relative to these members (2, 4). Even in the presence of flow through the housing (2), there will essentially no movement of the flow sensor (3) relative to the other members (2, 4). There can even be no movement of the flow sensor (3) relative to the other members (2, 4).

The flow straightener assembly (1) can comprise one or more tubes or tubular portions. The purpose of the one or more tubes or of the one or more tubular portions is flow straightening. The flow sensor (3) is then mounted to at least one of
- the housing (2),
- the one or more flow straightening members (4),
- one or more tubes,
- one or more tubular portions.

In a rigid embodiment, the flow sensor (3) is rigidly mounted to at least one of
- the housing (2),
- the one or more flow straightening members (4),
- the one or more tubes,
- the one or more tubular portions.

If the flow sensor (3) is rigidly mounted to one or more other members (2, 4), it can no longer move relative to these members (2, 4). Even in the presence of flow through the housing (2), there will essentially no movement of the flow sensor (3) relative to the other members (2, 4). There can even be no movement of the flow sensor (3) relative to the other members (2, 4).

It is envisaged that the flow sensor (3) is mounted to at least two of
- the housing (2),
- the one or more flow straightening members (4),
- one or more tubes,
- one or more tubular portions.

The flow sensor (3) can, by way of example, be mounted to one or more flow straightening members (4) and to the housing (2). The flow sensor (3) can, by way of another example, be mounted to one or more tubes and to the housing (2). The flow sensor (3) can, by way of yet another example, be mounted to one or more tubular portions and to the housing (2).

In a rigid embodiment, the flow sensor (3) can be rigidly mounted to at least two of
- the housing (2),
- the one or more flow straightening members (4),
- one or more tubes,
- one or more tubular portions.

If the flow sensor (3) is rigidly mounted to two or more other members (2, 4), it will no longer move relative to these members (2, 4). Even in the presence of flow through the housing (2), there will essentially no movement of the flow sensor (3) relative to the other members (2, 4). There can even be no movement of the flow sensor (3) relative to the two or more other members (2, 4).

The one or more flow straightening members (4) are preferably disposed inside the housing (2). Likewise, the one or more tubes are preferably disposed inside the housing (2). Further, the one or more tubular portions are preferably disposed inside the housing (2).

The one or more flow straightening members (4) ideally extend between an inlet and an outlet of the housing (2). Likewise, the one or more tubes preferably extend between an inlet and an outlet of the housing (2). Further, the one or more tubular portions preferably extend between an inlet and an outlet of the housing (2).

According to an aspect of the present disclosure, the one or more flow straightening members (4) are manufactured using an additive manufacturing technique such as three-dimensional printing. Manufacture of the one or more flow straightening members (4) can, in a special embodiment, involve selective laser sintering.

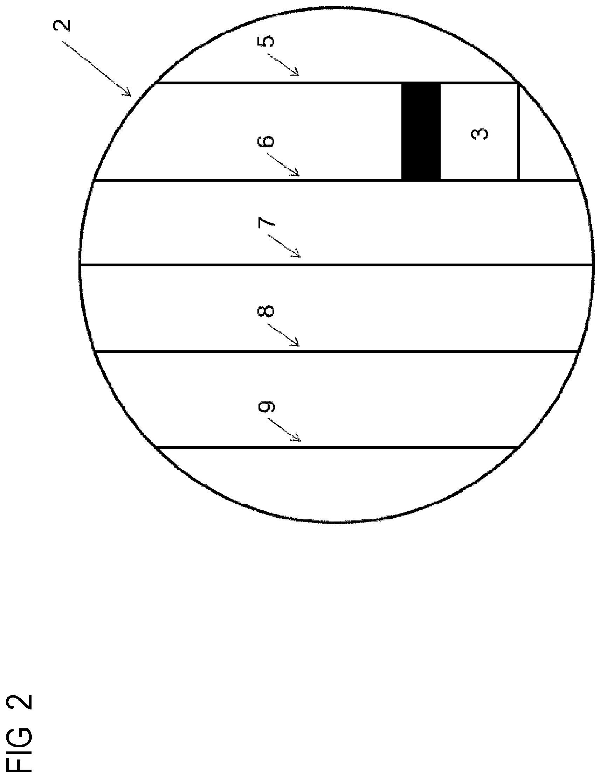

FIG 2 shows a flow straightener assembly (1) having a plurality of vanes (5 - 9). The plurality of vanes (5 - 9) is arranged inside the housing (2). That is, the plurality of flow straightening members as shown in FIG 2 comprises a plurality of vanes (5 - 9). In a special embodiment, the plurality of flow straightening members consists of a plurality of vanes (5 - 9).

It is envisaged that the plurality of vanes (5 - 9) comprises at least two vanes (5 - 9) that are parallel or substantially parallel to one another. It is also envisaged that the plurality of vanes (5 - 9) comprises at least five vanes (5 - 9) that are parallel or substantially parallel to one another. It is still envisaged that the plurality of vanes (5 - 9) comprises at least ten vanes (5 - 9) that are parallel or substantially parallel to one another. In a special embodiment, all vanes (5 - 9) of the plurality of vanes (5 - 9) are parallel or substantially parallel to one another. Parallel vanes (5 - 9) entail a well-defined flow profile.

The flow sensor (3) as illustrated in FIG 2 is arranged in between two vanes (5 - 9) of the plurality of vanes (5 - 9). More specifically, the flow sensor (3) can be arranged between two adjacent vanes (5 - 9) of the plurality of vanes (5 - 9). According to an aspect of the instant flow straightener assembly (1), the flow sensor (3) is arranged between two adjacent and parallel vanes (5 - 9) of the plurality of vanes (5 - 9).

The flow sensor (3) as illustrated in FIG 2 is advantageously mounted in between two vanes (5 - 9) of the plurality of vanes (5 - 9). More specifically, the flow sensor (3) can be mounted between two adjacent vanes (5 - 9) of the plurality of vanes (5 - 9). According to an aspect of the instant flow straightener assembly (1), the flow sensor (3) is mounted between two adjacent and parallel vanes (5 - 9) of the plurality of vanes (5 - 9).

The flow sensor (3) as illustrated in FIG 2 is ideally rigidly mounted in between two vanes (5 - 9) of the plurality of vanes (5 - 9). More specifically, the flow sensor (3) can be rigidly mounted between two adjacent vanes (5 - 9) of the plurality of vanes (5 - 9). According to an aspect of the instant flow straightener assembly (1), the flow sensor (3) is rigidly mounted between two adjacent and parallel vanes (5 - 9) of the plurality of vanes (5 - 9).

If the flow sensor (3) is rigidly mounted to two vanes (5 - 9), it will no longer move relative to these vanes (5 - 9). Even in the presence of flow through the housing (2), there will essentially no movement of the flow sensor (3) relative to the plurality of vanes (5 - 9). There can even be no movement of the flow sensor (3) relative to the plurality of vanes (5 - 9).

In an embodiment, the plurality of vanes (5 - 9) comprises at least two vanes (5 - 9) that are anchored to the housing (2). It is also envisaged that the plurality of vanes (5 - 9) comprises at least five vanes (5 - 9) that are anchored to the housing (2). It is still envisaged that the plurality of vanes (5 - 9) comprises at least ten vanes (5 - 9) that are anchored to the housing (2). In a special embodiment, all the vanes (5 - 9) of the plurality of vanes (5 - 9) are anchored to the housing (2).

In another embodiment, the plurality of vanes (5 - 9) comprises at least two vanes (5 - 9) that are anchored to one another. It is also envisaged that the plurality of vanes (5 - 9) comprises at least five vanes (5 - 9) that are anchored to one another. It is still envisaged that the plurality of vanes (5 - 9) comprises at least ten vanes (5 - 9) that are anchored to one another. In a special embodiment, all the vanes (5 - 9) of the plurality of vanes (5 - 9) are anchored to one another.

According to an aspect of the present disclosure, the plurality of vanes (5 - 9) is manufactured using an additive manufacturing technique such as three-dimensional printing. Manufacture of the plurality of vanes (5 - 9) can, in a special embodiment, involve selective laser sintering.

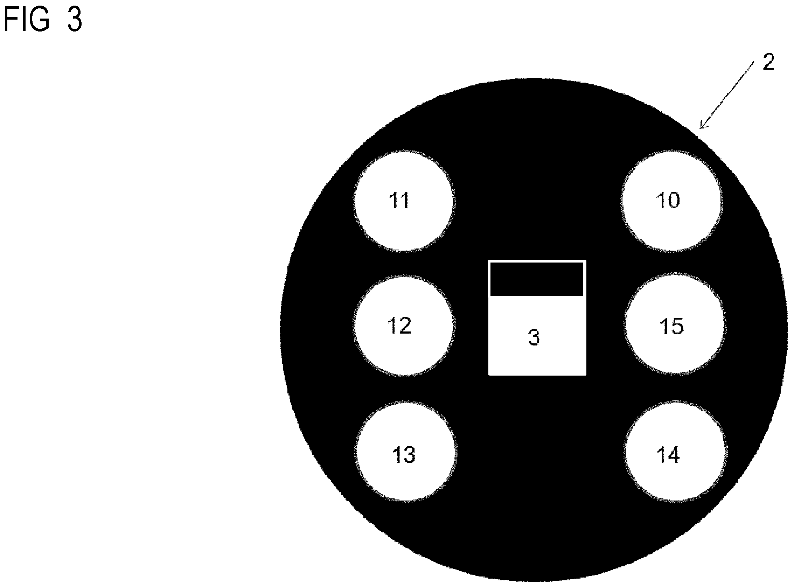

Now turning to FIG 3, a flow straightener assembly (1) having a plurality of tubular members (10 - 15) is shown. The tubular members (10 - 15) are preferably selected from at least one of
- tubular portions,
- tubes,
- tubular ducts.

The plurality of tubular members (10 - 15) is arranged inside the housing (2). That is, the plurality of flow straightening members as shown in FIG 3 comprises a plurality of tubular members (10 - 15). In a special embodiment, the plurality of flow straightening members consists of a plurality of tubular members (10 - 15).

It is envisaged that the plurality of tubular members (10 - 15) comprises at least two tubular members (10- 15) that are parallel or substantially parallel to one another. It is also envisaged that the plurality of tubular members (10- 15) comprises at least five tubular members (10- 15) that are parallel or substantially parallel to one another. It is still envisaged that the plurality of tubular members (10- 15) comprises at least ten tubular members (10 - 15) that are parallel or substantially parallel to one another. In a special embodiment, all tubular members (10 - 15) of the plurality of tubular members (10 - 15) are parallel or substantially parallel to one another. Parallel tubular members (10 - 15) entail a well-defined flow profile.

The flow sensor (3) as illustrated in FIG 3 is arranged in between two tubular members (10 - 15) of the plurality of tubular members (10- 15). More specifically, the flow sensor (3) can be arranged between two adjacent tubular members (10 - 15) of the plurality of tubular members (10 - 15). According to an aspect of the instant flow straightener assembly (1), the flow sensor (3) is arranged between two adjacent and parallel tubular members (10 - 15) of the plurality of tubular members (10 - 15).

The flow sensor (3) as illustrated in FIG 3 is advantageously mounted in between two tubular members (10 - 15) of the plurality of tubular members (10 - 15). More specifically, the flow sensor (3) can be mounted between two adjacent tubular members (10 - 15) of the plurality of tubular members (10 - 15). According to an aspect of the instant flow straightener assembly (1), the flow sensor (3) is mounted between two adjacent and parallel tubular members (10- 15) of the plurality of tubular members (10 - 15).

The flow sensor (3) as illustrated in FIG 3 is ideally rigidly mounted in between two tubular members (10 - 15) of the plurality of tubular members (10 - 15). More specifically, the flow sensor (3) can be rigidly mounted between two adjacent tubular members (10- 15) of the plurality of tubular members (10 - 15). According to an aspect of the instant flow straightener assembly (1), the flow sensor (3) is rigidly mounted between two adjacent and parallel tubular members (10 - 15) of the plurality of tubular members (10- 15).

If the flow sensor (3) is rigidly mounted to two tubular members (10 - 15), it will no longer move relative to these tubular members (10 - 15). Even in the presence of flow through the housing (2), there will essentially no movement of the flow sensor (3) relative to the plurality of tubular members (10 - 15). There can even be no movement of the flow sensor (3) relative to the plurality of tubular members (10 - 15).

According to an aspect of the present embodiment, the flow straightener assembly (1) comprises a disk arranged inside the housing (2) of the flow straightener assembly (1). The disk is preferably anchored to the housing (2). Bores through the disk form the tubular members (10 - 15). According to a special aspect of the instant embodiment, cylindrical bores through the form the tubular members (10 - 15).

According to a variant of the present embodiment, bores through the disk form the tubular portions (10 - 15). According to a special aspect of the instant embodiment, cylindrical bores through the form the tubular portions (10 - 15). According to another variant of the present embodiment, bores through the disk form the tubes (10 - 15). According to a special aspect of the instant embodiment, cylindrical bores through the form the tubes (10 - 15). According to still another variant of the present embodiment, cylindrical bores through the disk form the tubular ducts (10 - 15). According to a special aspect of the instant embodiment, cylindrical bores through the form the tubular ducts (10 - 15).

The bores through the disk, especially the cylindrical bores through the disk, each have a diameter. More specifically, the tubular members (10 - 15) each have a diameter. In an embodiment, at least two tubular members (10 - 15) have the same diameter. In another embodiment, at least five tubular members (10 - 15) have the same diameter. In still another embodiment, at least ten tubular members (10- 15) have the same diameter.

Where tubular portions (10- 15) form the tubular members (10 - 15), the tubular portions (10 - 15) also each have a diameter. In an embodiment, at least two tubular portions (10 - 15) have the same diameter. In another embodiment, at least five tubular portions (10 - 15) have the same diameter. In still another embodiment, at least ten tubular portions (10 - 15) have the same diameter.

Where tubes (10 - 15) form the tubular members (10 - 15), the tubes (10 - 15) also each have a diameter. In an embodiment, at least two tubes (10 - 15) have the same diameter. In another embodiment, at least five tubes (10- 15) have the same diameter. In still another embodiment, at least ten tubes (10 - 15) have the same diameter.

Where tubular ducts (10 - 15) form the tubular members (10 - 15), the tubular ducts (10 - 15) also each have a diameter. In an embodiment, at least two tubular ducts (10 - 15) have the same diameter. In another embodiment, at least five tubular ducts (10 - 15) have the same diameter. In still another embodiment, at least ten tubular ducts (10 - 15) have the same diameter.

By using the same or similar diameters, the complexity of the flow straightener assembly (1) is reduced. The same tool can be used to machine more than one bore such that manufacture of the flow straightener assembly (1) is alleviated.

According to an aspect of the present disclosure, the plurality of tubular members (10 - 15) is manufactured using an additive manufacturing technique such as three-dimensional printing. Manufacture of the plurality of tubular members (10 - 15) can, in a special embodiment, involve selective laser sintering.

It is also envisaged that the disk having the plurality of tubular members (10 - 15) is manufactured using an additive manufacturing technique such as three-dimensional printing. Manufacture of the disk and of the plurality of tubular members (10 - 15) can, in a special embodiment, involve selective laser sintering.

According to another aspect of the present disclosure, the disk and the plurality of tubular members (10- 15) are manufactured using injection molding.

The disk advantageously also comprises a recess or a mount for the flow sensor (3). More specifically, the disk comprises a recess or a mount for an ultrasonic flow sensor (3). The recess or the mount for the flow sensor (3) can, by way of non-limiting example, be arranged between two tubular members (10 - 15). More specifically, the recess or the mount for the flow sensor (3) can be arranged directly between neighboring two tubular members (10 - 15). Accordingly, no other tubular members (10 - 15) are situated between these two tubular members (10 - 15).

The recess or the mount for the flow sensor (3) can, by way of another non-limiting example, be arranged between two tubular portions (10 - 15). More specifically, the recess or the mount for the flow sensor (3) can be arranged directly between two neighboring tubular portions (10 - 15). Accordingly, no other tubular members (10- 15) are situated between these two tubular portions (10 - 15).

The recess or the mount for the flow sensor (3) can, by way of yet another non-limiting example, be arranged between two tubes (10 - 15). More specifically, the recess or the mount for the flow sensor (3) can be arranged directly between two neighboring tubes (10 - 15). Accordingly, no other tubular members (10 - 15) are situated between these two tubes (10 - 15).

The recess or the mount for the flow sensor (3) can, by way of still another non-limiting example, be arranged between two tubular ducts (10 - 15). More specifically, the recess or the mount for the flow sensor (3) can be arranged directly between two neighboring tubular ducts (10 - 15). Accordingly, no other tubular members (10 - 15) are situated between these two tubular ducts (10 - 15).

The flow sensor (3), especially the ultrasonic flow sensor (3) or the ultrasonic transducer (3), needs be fastened to the flow straightener assembly (1). To that end, the flow straightener assembly (1) can comprise a recess or a mount. The flow sensor (3), especially the ultrasonic flow sensor (3) or the ultrasonic transducer (3) is generally received by a socket (16).

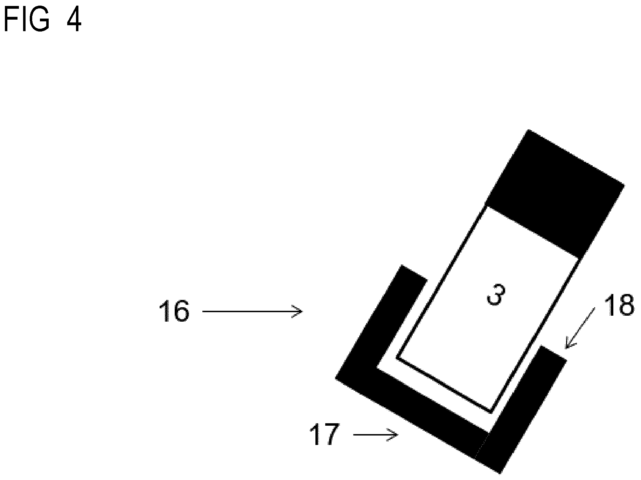

A socket (16) for receiving a flow sensor (3) such as an ultrasonic flow sensor (3) or an ultrasonic transducer (3) is illustrated in FIG 4. The socket (16) comprises at least one of
- a seat (17),
- an envelope (18).

That is, the flow sensor (3) is directly or indirectly mounted to at least one of
- the seat (17),
- the envelope (18).

According to a special aspect of the socket (16), an ultrasonic flow sensor (3) is directly or indirectly mounted to at least one of
- the seat (17),
- the envelope (18).

According to another special aspect of the socket (16), an ultrasonic transducer (3) is directly or indirectly mounted to at least one of
- the seat (17),
- the envelope (18).

The seat (17) preferably mechanically connects to the envelope (18). That is, the socket (16) comprises a seat (17) and an envelope (18) and the two mechanically connect to one another. Ideally, the seat (17) and the envelope (18) are integral. That is, the seat (17) and the envelope (18) form one piece. An integral solution involves few independent parts. Few independent parts mean few parts are prone to failure, so the assembly becomes more robust.

It is envisaged that the socket (16) or parts of it are manufactured using an additive manufacturing technique such as three-dimensional printing. Manufacture of the socket (16) or parts of it can, in a special embodiment, involve selective laser sintering. According to another aspect of the present disclosure, the socket (16) or parts of it are manufactured using injection molding.

It is also envisaged that the seat (17) and the envelope (18) are manufactured using an additive manufacturing technique such as three-dimensional printing. Manufacture of the seat (17) and the envelope (18) can, in a special embodiment, involve selective laser sintering. According to another aspect of the present disclosure, the seat (17) and the envelope (18) are manufactured using injection molding.

A mounting member is used to mount the flow sensor (3) such as the ultrasonic flow sensor (3) or the ultrasonic transducer (3) to the socket (16). The mounting member can, by way of non-limiting example, comprise at least one of
- a glued mechanical connection,
- a threaded mechanical connection,
- a bayonet connection,
- a snap-on connection,
- a snug fit connection.

The mounting member can also consist of one of
- a glued mechanical connection,
- a threaded mechanical connection,
- a bayonet connection,
- a snap-on connection,
- a snug fit connection.

A mounting member affords a mechanical connection between the flow sensor (3) and the seat (17). The mounting member is selected from at least one of
- a glued mechanical connection,
- a threaded mechanical connection,
- a bayonet connection,
- a snap-on connection,
- a snug fit connection.

In another embodiment, a mounting member affords a mechanical connection between the flow sensor (3) and the envelope (18). The mounting member is selected from at least one of
- a glued mechanical connection,
- a threaded mechanical connection,
- a bayonet connection,
- a snap-on connection,
- a snug fit connection.

More specifically, a mounting member can afford a mechanical connection between an ultrasonic flow sensor (3) and the seat (17). The mounting member is selected from at least one of
- a glued mechanical connection,
- a threaded mechanical connection,
- a bayonet connection,
- a snap-on connection,
- a snug fit connection.

A mounting member can also afford a mechanical connection between an ultrasonic transducer (3) and the envelope (18). The mounting member is selected from at least one of
- a glued mechanical connection,
- a threaded mechanical connection,
- a bayonet connection,
- a snap-on connection,
- a snug fit connection.

A mounting member can still afford a mechanical connection between an ultrasonic transducer (3) and the seat (17). The mounting member is preferably selected from at least one of
- a glued mechanical connection,
- a threaded mechanical connection,
- a bayonet connection,
- a snap-on connection,
- a snug fit connection.

A mounting member can also afford a mechanical connection between an ultrasonic transducer (3) and the envelope (18). The mounting member is preferably selected from at least one of
- a glued mechanical connection,
- a threaded mechanical connection,
- a bayonet connection,
- a snap-on connection,
- a snug fit connection.

The socket (16) and its components (17, 18) are generally embedded in the flow straightener assembly (1). The socket (16) and its components (17, 18) are preferably integrated in the flow straightener assembly (1). It is envisaged that the flow straightener assembly (1) and the socket (16) are manufactured using an additive manufacturing technique such as three-dimensional printing. Manufacture of the flow straightener assembly (1) and the socket (16) can, in a special embodiment, involve selective laser sintering. According to another aspect of the present disclosure, the flow straightener assembly (1) and the socket (16) are manufactured using injection molding.

Ideally, the flow straightener assembly (1) and the socket (16) are integral. That is, the flow straightener assembly (1) and the socket (16) form one piece. An integral solution involves few independent parts. Few independent parts mean few parts are prone to failure, so the assembly becomes more robust.

The socket (16) and its components (17, 18) are generally embedded in the plurality of flow straightening members (4 - 15). The socket (16) and its components (17, 18) are preferably integrated in the plurality of flow straightening members (4 - 15). It is envisaged that the plurality of flow straightening members (4 - 15) and the socket (16) are manufactured using an additive manufacturing technique such as three-dimensional printing. Manufacture of the plurality of flow straightening members (4 - 15) and the socket (16) can, in a special embodiment, involve selective laser sintering. According to another aspect of the present disclosure, the plurality of flow straightening members (4 - 15) and the socket (16) are manufactured using injection molding.

Ideally, the plurality of flow straightening members (4 - 15) and the socket (16) are integral. That is, the plurality of flow straightening members (4 - 15) and the socket (16) form one piece. An integral solution involves few independent parts. Few independent parts mean few parts are prone to failure, so the assembly becomes more robust.

The socket (16) and its components (17, 18) can also be embedded in a plurality of vanes (5 - 9). The socket (16) and its components (17, 18) are preferably integrated in the plurality of vanes (5 - 9). It is envisaged that the plurality of vanes (5 - 9) and the socket (16) are manufactured using an additive manufacturing technique such as three-dimensional printing. Manufacture of the plurality of vanes (5 - 9) and the socket (16) can, in a special embodiment, involve selective laser sintering. According to another aspect of the present disclosure, the plurality of vanes (5 - 9) and the socket (16) are manufactured using injection molding.

Ideally, the plurality of vanes (5 - 9) and the socket (16) are integral. That is, the plurality of vanes (5 - 9) and the socket (16) form one piece. An integral solution involves few independent parts. Few independent parts mean few parts are prone to failure, so the assembly becomes more robust.

The socket (16) and its components (17, 18) can also be embedded in a plurality of tubular members (10 - 15). The socket (16) and its components (17, 18) are preferably integrated in the plurality of tubular members (10 - 15). It is envisaged that the plurality of tubular members (10- 15) and the socket (16) are manufactured using an additive manufacturing technique such as three-dimensional printing. Manufacture of the plurality of tubular members (10 - 15) and the socket (16) can, in a special embodiment, involve selective laser sintering. According to another aspect of the present disclosure, the plurality of tubular members (10- 15) and the socket (16) are manufactured using injection molding.

Ideally, the plurality of tubular members (10 - 15) and the socket (16) are integral. That is, the plurality of tubular members (10 - 15) and the socket (16) form one piece. An integral solution involves few independent parts. Few independent parts mean few parts are prone to failure, so the assembly becomes more robust.

The flow straightener assembly (1) can also be part of a flow meter such as an ultrasonic flow meter. The various parts of the flow meter can connect to one another via mechanical connectors such as
- threaded connectors,
- snap-on connectors,
- bayonet connectors,
- snug-fit connectors.

More specifically, the various parts of the ultrasonic flow meter can connect to one another via mechanical connectors such as
- threaded connectors,
- snap-on connectors,
- bayonet connectors,
- snug-fit connectors.

It is envisaged that the flow straightener assembly (1) has a housing (2) with such connectors. These connectors can be arranged on either end of the housing (2) or only on one end of the housing (2). They afford permanent mechanical connections between the flow straightener assembly (1) and the remainder of the flow meter. What's more, the connectors afford a modular approach wherein the flow straightener assembly (1) is a module of a piping circuit.

As described in detail herein, the present disclosure deals with a flow straightener assembly (1) for straightening a flow in a flow meter or in a piping circuit, the flow straightener assembly (1) comprising a plurality of flow straightening members (4 - 15);
the plurality of flow straightening members (4 - 15) comprising at least one first flow straightening member selected from:
   - a vane (5, 6),
   - a tubular member (12, 15);
the flow straightener assembly (1) also comprising a socket (16) for receiving a flow sensor (3), the socket (16) comprising a seat (17) and a mounting member for directly or indirectly mounting the flow sensor (3) to the seat (17); and
wherein the socket (16) is embedded in the plurality of flow straightening members (4 -15).

According to an aspect of the instant disclosure, the flow straightener assembly (1) for straightening a flow in a flow meter or in a piping circuit is a flow straightener assembly (1) for straightening a flow of a liquid such as water in a flow meter or in a piping circuit.

The vane (5, 6) preferably is a vane of the at least one first flow straightening member (5, 6; 12, 15). The tubular member (12, 15) preferably is a tubular member (12, 15) of the at least one first flow straightening member (5, 6; 12, 15). According to an aspect of the instant disclosure, the plurality of flow straightening members (4 - 15) comprises flow straightening members selected from at least one of:
- a vane (5, 6),
- a tubular member (12, 15).

The socket (16) is configured to receive the flow sensor (3). When the socket (16) has received the flow sensor (3), the flow sensor (3) will advantageously be directly or indirectly mounted to the seat (17). In a specific embodiment, the flow sensor (3) will then be rigidly mounted to the seat (17).

The flow sensor (3) is advantageously selected from:
- an ultrasonic flow sensor (3),
- an ultrasonic transducer (3).

The present disclosure also deals with any of the aforementioned flow straightener assemblies (1), wherein the socket (16) is integrated into the plurality of flow straightening members (4 - 15).

The socket (16) is preferably integral with the plurality of flow straightening members (4 - 15). Accordingly, the socket (16) and the plurality of flow straightening members (4 - 15) form a single piece.

The present disclosure still deals with any of the aforementioned flow straightener assemblies (1), wherein the socket (16) comprises an envelope (18);
wherein the seat (17) of the socket (16) mechanically connects to the envelope (18) of the socket (16); and
wherein the mounting member allows the flow sensor (3) to be directly mounted to at least one of:
   the seat (17);
   the envelope (18).

In an embodiment, the seat (17) is integral with the envelope (18). That is, the seat (17) and the envelope (18) form a single piece.

In an embodiment, the flow sensor (3) is directly mounted to the seat (17) via the mounting member. In an alternate embodiment, the flow sensor (3) is directly mounted to the envelope (18) via the mounting member.

The instant disclosure also deals with any of the aforementioned flow straightener assemblies (1), the plurality of flow straightening members (4 - 15) comprising at least one second flow straightening member (6, 5; 15, 12) selected from:
- a vane (6, 5),
- a tubular member (15, 12); and
   wherein the socket (16) is disposed in between the at least one first flow straightening member (5, 6; 12, 15) and the at least one second flow straightening member (6, 5; 15, 12).

The aforementioned vane (6, 5) preferably is a vane of the at least one second flow straightening member (6, 5; 15, 12). The aforementioned tubular member (15, 12) preferably is a tubular member (15, 12) of the at least one second flow straightening member (6, 5; 15, 12).

The socket (16) is preferably mounted to the at least one first flow straightening member (5, 6; 12, 15) and to the at least one second flow straightening member (6, 5; 15, 12). By mounting the socket (16) to both flow the at least one first (5, 6; 12, 15) and the at least one second flow straightening members (6, 5; 15, 12), the arrangement becomes mechanically robust. The socket (16) is ideally rigidly mounted to the at least one first flow straightening member (5, 6; 12, 15) and to the at least one second flow straightening member (6, 5; 15, 12).

The present disclosure also deals with any of the aforementioned flow straightener assemblies (1) involving at least one second flow straightening member (6, 5; 15, 12), wherein the at least one first flow straightening member (5, 6; 12, 15) is arranged adjacent the at least one second flow straightening member (6, 5; 15, 12).

The instant disclosure also deals with any of the aforementioned flow straightener assemblies (1), wherein the flow straightener assembly (1) comprises the flow sensor (3); and
wherein the flow sensor (3) is directly mounted to the seat (17) of the socket (16) via the mounting member.

The present disclosure still deals with any of the aforementioned flow straightener assemblies (1) involving an envelope (18), wherein the flow straightener assembly (1) comprises the flow sensor (3); and
wherein the flow sensor (3) is directly mounted to the envelope (18) via the mounting member.

The instant disclosure also deals with any of the aforementioned flow straightener assemblies (1), wherein the flow sensor (3) comprises an ultrasonic transducer.

In an embodiment, the flow sensor (3) is an ultrasonic transducer.

The instant disclosure still deals with any of the aforementioned flow straightener assemblies (1), wherein the flow straightener assembly (1) comprises a cylindrical housing (2) enveloping the plurality of flow straightening members (4 - 15) and enveloping the socket (16);
wherein the housing (2) has a first open and distal end; and
wherein the housing (2) comprises a first connector for connecting the flow straightener assembly (1) to the flow meter or to the piping circuit, the first connector being arranged at the first open and distal end and being selected from at least one of:
   - a first threaded connector,
   - a first snap-on connector,
   - a first bayonet connector,
   - a first snug-fit connector.

In an embodiment, the first open and distal end of the housing (2) comprises an inlet port of the housing (2). More specifically, the first open and distal end of the housing (2) can be an inlet port of the housing (2). In an alternate embodiment, the first open and distal end of the housing (2) comprises an outlet port of the housing (2). More specifically, the first open and distal end of the housing (2) can be an outlet port of the housing (2).

The first connector is ideally selected from one of:
- a first threaded connector,
- a first snap-on connector,
- a first bayonet connector,
- a first snug-fit connector.

The present disclosure still deals with any of the aforementioned flow straightener assemblies (1) involving a first connector,
wherein the housing (2) has a second open and distal end;
wherein the second open and distal end is disposed opposite the first open and distal end; and
wherein the housing (2) comprises a second connector for connecting the flow straightener assembly (1) to the flow meter or to the piping circuit, the second connector being arranged at the second open and distal end and being selected from at least one of:
   - a second threaded connector,
   - a second snap-on connector,
   - a second bayonet connector,
   - a second snug-fit connector.

In an embodiment, the second open and distal end of the housing (2) comprises an outlet port of the housing (2). More specifically, the second open and distal end of the housing (2) can be an outlet port of the housing (2). In an alternate embodiment, the second open and distal end of the housing (2) comprises an inlet port of the housing (2). More specifically, the second open and distal end of the housing (2) can be an inlet port of the housing (2).

The second connector is ideally selected from at least one of:
- a second threaded connector,
- a second snap-on connector,
- a second bayonet connector,
- a second snug-fit connector.

It is envisaged that the first and second connectors are of the same type. In an embodiment, the first connector comprises a first threaded connector and the second connector comprises a second threaded connector. In another embodiment, the first connector comprises a first snap-on connector and the second connector comprises a second snap-on connector. In yet another embodiment, the first connector comprises a first bayonet connector and the second connector comprises a second bayonet connector. It is envisaged that the first connector is a first threaded connector and the second connector is a second threaded connector. It is also envisaged that the first connector is a first snap-on connector and the second connector is a second snap-on connector. It is still envisaged that the first connector is a first bayonet connector and the second connector is a second bayonet connector. It is still further envisaged that the first connector is a first snug-fit connector and the second connector is a second snug-fit connector.

The present disclosure still deals a flow meter comprising an inlet port, an outlet port, and any of the flow straightener assemblies (1) as described above,
wherein the flow straightener assembly (1) is arranged between the inlet port of the flow meter and the outlet port of the flow meter.

The flow meter preferably comprises an ultrasonic flow meter. The flow meter ideally is an ultrasonic flow meter.

The present disclosure still deals any of the aforementioned flow meters, wherein the inlet port of the flow meter and the outlet port of the flow meter define an axial direction running from the inlet port of the flow meter to the outlet port of the flow meter and define a radial direction;
wherein the radial direction is perpendicular or substantially perpendicular to the axial direction; and
wherein the plurality of flow straightening members (4 - 15) comprises the at least one first flow straightening member (5, 6; 12, 15) selected from:
   the vane (5, 6) in the form of a radial vane (5, 6),
   the tubular member (12, 15) in the form of an axial tubular member (12, 15).

The aforementioned vane (5, 6) preferably is a radial vane of the at least one first flow straightening member (5, 6; 12, 15). The aforementioned tubular member (12, 15) preferably is an axial tubular member (12, 15) of the at least one first flow straightening member (5, 6; 12, 15).

In an embodiment, the radial direction is perpendicular to the axial direction. At least one first flow straightening member (4 - 15) in the form of a radial vane (5, 6) then leads to a well-defined flow profile.

The present disclosure still deals any of the aforementioned flow meters, wherein the plurality of flow straightening members (4 - 15) of the flow straightener assembly (1) comprises at least one second flow straightening member (6, 5; 15, 12) selected from:
- a radial vane (6, 5),
- an axial tubular member (15, 12); and
   wherein the socket (16) is disposed in between the at least one first flow straightening member (5, 6; 12, 15) and the at least one second flow straightening member (6, 5; 15, 12).

The aforementioned vane (6, 5) preferably is a radial vane of the at least one second flow straightening member (6, 5; 15, 12). The aforementioned tubular member (15, 12) preferably is an axial tubular member (15, 12) of the at least one second flow straightening member (6, 5; 15, 12).

The socket (16) is preferably mounted to the at least one first flow straightening member (5, 6; 12, 15) and to the at least one second flow straightening member (6, 5; 15, 12). By mounting the socket (16) to both the at least one first and the at least one second flow straightening members (6, 5; 15, 12), the arrangement becomes mechanically robust. The socket (16) is ideally rigidly mounted to the at least one first flow straightening member (5, 6; 12, 15) and to the at least one second flow straightening member (6, 5; 15, 12).

The present disclosure still deals any of the aforementioned flow meters involving at least one second flow straightening member (6, 5; 15, 12), wherein the at least one first flow straightening member (5, 6; 12, 15) is arranged adjacent the at least one second flow straightening member (6, 5; 15, 12).

The present disclosure still deals any of the aforementioned flow meters, wherein the flow sensor (3) comprises an ultrasonic transducer.

The instant disclosure also deals with any of the aforementioned flow meters, wherein the flow sensor (3) is an ultrasonic transducer.

It should be understood that the foregoing relates only to certain embodiments of the disclosure. Numerous changes can be made therein without departing from the scope of the disclosure as defined by the following claims. It should also be understood that the disclosure is not restricted to the illustrated embodiments. Various modifications can be made within the scope of the claims.

### Reference numerals

1 flow straightener assembly
2 housing
3 sensor
4 flow straightening member
5-9 vanes as flow straightening members
10 - 15 tubular members as flow straightening members
16 socket
17 seat
18 envelope

## Claims

1. A flow straightener assembly (1) for straightening a flow in a flow meter or in a piping circuit, the flow straightener assembly (1) comprising a plurality of flow straightening members (4 - 15);
the plurality of flow straightening members (4 - 15) comprising at least one first flow straightening member selected from:
- a vane (5, 6),
- a tubular member (12, 15);
the flow straightener assembly (1) also comprising a socket (16) for receiving a flow sensor (3), the socket (16) comprising a seat (17) and a mounting member for directly or indirectly mounting the flow sensor (3) to the seat (17); and
wherein the socket (16) is embedded in the plurality of flow straightening members (4 -15).

2. The flow straightener assembly (1) according to claim 1, wherein the socket (16) is integrated into the plurality of flow straightening members (4 - 15).

3. The flow straightener assembly (1) according to any of the claims 1 to 2, wherein the socket (16) comprises an envelope (18);
wherein the seat (17) of the socket (16) mechanically connects to the envelope (18) of the socket (16); and
wherein the mounting member allows the flow sensor (3) to be directly mounted to at least one of:
the seat (17);
the envelope (18).

4. The flow straightener assembly (1) according to any of the claims 1 to 3, the plurality of flow straightening members (4 - 15) comprising at least one second flow straightening member (6, 5; 15, 12) selected from:
- a vane (6, 5),
- a tubular member (15, 12); and
wherein the socket (16) is disposed in between the at least one first flow straightening member (5, 6; 12, 15) and the at least one second flow straightening member (6, 5; 15, 12).

5. The flow straightener assembly (1) according to claim 4, wherein the at least one first flow straightening member (5, 6; 12, 15) is arranged adjacent the at least one second flow straightening member (6, 5; 15, 12).

6. The flow straightener assembly (1) according to any of the claims 1 to 5, wherein the flow straightener assembly (1) comprises the flow sensor (3); and
wherein the flow sensor (3) is directly mounted to the seat (17) of the socket (16) via the mounting member.

7. The flow straightener assembly (1) according to claim 3, wherein the flow straightener assembly (1) comprises the flow sensor (3); and
wherein the flow sensor (3) is directly mounted to the envelope (18) via the mounting member.

8. The flow straightener assembly (1) according to any of the claims 6 to 7, wherein the flow sensor (3) comprises an ultrasonic transducer.

9. The flow straightener assembly (1) according to any of the claims 1 to 8, wherein the flow straightener assembly (1) comprises a cylindrical housing (2) enveloping the plurality of flow straightening members (4 - 15) and enveloping the socket (16);
wherein the housing (2) has a first open and distal end; and
wherein the housing (2) comprises a first connector for connecting the flow straightener assembly (1) to the flow meter or to the piping circuit, the first connector being arranged at the first open and distal end and being selected from at least one of:
- a first threaded connector,
- a first snap-on connector,
- a first bayonet connector,
- a first snug-fit connector.

10. The flow straightener assembly (1) according to claim 9,
wherein the housing (2) has a second open and distal end;
wherein the second open and distal end is disposed opposite the first open and distal end; and
wherein the housing (2) comprises a second connector for connecting the flow straightener assembly (1) to the flow meter or to the piping circuit, the second connector being arranged at the second open and distal end and being selected from at least one of:
- a second threaded connector,
- a second snap-on connector,
- a second bayonet connector,
- a second snug-fit connector.

11. A flow meter comprising an inlet port, an outlet port, and the flow straightener assembly (1) according to any of the claims 6 to 8,
wherein the flow straightener assembly (1) is arranged between the inlet port of the flow meter and the outlet port of the flow meter.

12. The flow meter according to claim 11, wherein the inlet port of the flow meter and the outlet port of the flow meter define an axial direction running from the inlet port of the flow meter to the outlet port of the flow meter and define a radial direction;
wherein the radial direction is perpendicular or substantially perpendicular to the axial direction; and
wherein the plurality of flow straightening members (4 - 15) comprises the at least one first flow straightening member (5, 6; 12, 15) selected from:
the vane (5, 6) in the form of a radial vane (5, 6),
the tubular member (12, 15) in the form of an axial tubular member (12, 15).

13. The flow meter according to claim 12, wherein the plurality of flow straightening members (4 - 15) of the flow straightener assembly (1) comprises at least one second flow straightening member (6, 5; 15, 12) selected from:
- a radial vane (6, 5),
- an axial tubular member (15, 12); and
wherein the socket (16) is disposed in between the at least one first flow straightening member (5, 6; 12, 15) and the at least one second flow straightening member (6, 5; 15, 12).

14. The flow meter according to claim 13, wherein the at least one first flow straightening member (5, 6; 12, 15) is arranged adjacent the at least one second flow straightening member (6, 5; 15, 12).

15. The flow meter according to any of the claims 11 to 14, wherein the flow sensor (3) comprises an ultrasonic transducer.
